# EUROPÄISCHE PATENTSCHRIFT

(11) **EP 4 211 045 B1**
(45) Veröffentlichungstag und Bekanntmachung des Hinweises auf die Patenterteilung: **29.01.2025**
(21) Anmeldenummer: 21773330.2
(22) Anmeldetag: 02.09.2021
(51) Int. Cl.: B65D 21/08, B65D 85/804, B65D 25/16, B65D 43/02

(54) **EXPANDIERBARER AUFGUSSBEHÄLTER**
EXPANDABLE INFUSION CONTAINER
RÉCIPIENT D'INFUSION EXTENSIBLE

(30) Priorität: 10.09.2020 CH 11382020
(43) Veröffentlichungstag der Anmeldung: 19.07.2023
(73) Patentinhaber: Swiss Tea Innovation AG, 4600 Olten (CH)
(72) Erfinder: WÜST, Theodor, 8620 Wetzikon (CH); DEL BON, Franco, 4663 Aarburg (CH); SCHERRER, Joseph Alain, 4612 Wangen b. Olten (CH)
(74) Vertreter: Bohest AG Branch Ostschweiz
(86) Internationale Anmeldenummer: PCT/EP2021/074285
(87) Internationale Veröffentlichungsnummer: WO 2022/053395

(56) Entgegenhaltungen:
- US-A1- 2014 026 761
- US-A1- 2018 305 115

## Beschreibung

Die vorliegende Erfindung betrifft einen expandierbaren Aufgussbehälter zur Zubereitung eines Aufgussgetränks umfassend ein zerstörbares Garantiesiegel gemäss dem Oberbegriff der unabhängigen Ansprüche.

Unter einem Aufgussgetränk wird im Zusammenhang mit der vorliegenden Erfindung jede Art von Getränk verstanden, das ausgehend von einer Aufgusstrockensubstanz durch Kontaktierung mit einer kalten oder heissen Aufgussflüssigkeit zubereitet werden kann. Ein typisches Aufgussgetränk ist beispielsweise Tee, der durch Aufbrühen von Teeblättern oder Kräutern mit heissem Wasser zubereitet wird.

Es ist bekannt, dass unterschiedliche Teesorten zur optimalen Entfaltung ihres Aromas ein vergleichsweise langes Brühen von einigen Minuten Dauer erfordern. Die Kontaktzeit zwischen den Teeblättern und dem Brühwasser muss daher ausreichend lang sein. Mit der EP 3 119 245 B1 ist eine Teezubereitungsvorrichtung und ein Verfahren bekannt geworden, welches es ermöglicht, eine abgemessene Menge einer Aufgusstrockensubstanz über eine bestimmte Kontaktierungsdauer mit einer Aufgussflüssigkeit in Kontakt zu bringen. Dies wird durch einen expandierbaren Aufgussbehälter ermöglicht. Um die Aufgussflüssigkeit in den Behälter zu bringen, wird ein Deckel dieses Behälters mit einer Füllnadel durchstochen und durch diese Füllnadel die Aufgussflüssigkeit in den Behälter eingebracht. Zur Entleerung des Aufgussbehälters ist ein Auslassventil vorgesehen, welches sich beim Überschreiten eines Überdrucks im Innern des Aufgussbehälters öffnet. Der Überdruck wird durch Zusammenstauchen des Behälters mit einem Auspresskolben erreicht.

Je nach Aufgusstrockensubstanz kann diese in einer mehr oder weniger komprimierten Form vorliegen. Da der Behälter expandierbar ist, sind der Boden des Behälters und der Deckel des Behälters nicht zwingenderweise immer in der gleichen Lage zueinander. Ausserdem ist am nach dem Auspressen des zusammengedrückten Behälters nicht unmittelbar sichtbar, ob dieser schon einmal benutzt worden ist oder nicht. Ein zusammendrückbarer Behälter gemäß dem Oberbegriff des Anspruchs 1 ist mit der US 2018/03055115 A1 bekannt geworden.

Es ist Aufgabe der Erfindung zumindest einen oder mehrere Nachteile des Standes der Technik zu beheben. Insbesondere soll ein Aufgussbehälter bereitgestellt werden, der einfach gelagert und transportiert werden kann und dabei insbesondere ein kleines Volumen einnimmt. Vorzugsweise soll am Aufgussbehälter ersichtlich sein, ob dieser schon benutzt worden ist.

Diese Aufgabe wird durch die in den unabhängigen Patentansprüchen definierten Vorrichtungen gelöst. Weitere Ausführungsformen ergeben sich aus den abhängigen Patentansprüchen.

Die vorliegende Erfindung betrifft einen expandierbaren Aufgussbehälter zur Aufnahme einer Aufgusstrockensubstanz für die Zubereitung eines Aufgussgetränks. Der Aufgussbehälter umfasst ein Bodenteil, ein Deckelteil und ein das Bodenteil und das Deckelteil verbindendes Wandteil. Das Wandteil weist eine variable Länge auf und ist mit einem ersten Ende am Bodenteil befestigt und mit einem zweiten Ende mit dem Deckelteil verbunden. Das Deckelteil und das Bodenteil sind über ein zerstörbares Garantiesiegel miteinander verbunden.

Die Verbindung zwischen dem Deckelteil und dem Bodenteil ermöglicht es, dass das Deckelteil und das Bodenteil eine spezifische Lage zueinander aufweisen. Das zerstörbare Garantiesiegel stellt sicher, dass am Aufgussbehälter direkt ersichtlich ist, ob dieser bereits benutzt worden ist oder nicht. Die Zerstörung des Garantiesiegels ermöglicht es, dass sich die Lage des Deckelteils relativ zum Bodenteil verändern kann und somit der Aufgussbehälter in eine expandierte Lage gebracht werden kann.

Das Garantiesiegel kann als eine Materialdünnstelle, wie beispielsweise ein Abrissfilm, ausgebildet sein. Ein Abrissfilm ist eine Stelle im Material mit einer im Verhältnis zur Breite geringen Höhe, respektive Dicke. Ein Abrissfilm ist typischerweise dicker als 10 pm und überschreitet vorzugsweise eine Dicke von 500 pm nicht. Er ist insbesondere höchstens halb so dick wie eine daran anschliessende Wandung.

Ein Abrissfilm ist einfach in der Fertigung und ermöglicht dennoch ein vollständiges Verbinden zweier Teile, sodass im Bereich des Garantiesiegels kein Schmutz durch das Garantiesiegel durchdringen kann.

Alternativ ist es möglich, das Garantiesiegel als eine Vielzahl von Abreissstegen auszubilden.

Durch die Ausbildung als Abreisssteg sind zwei Elemente, im Vergleich zu einem Abrissfilm, über eine geringere Länge miteinander verbunden, was die benötigte Kraft zum Öffnen des Garantiesiegels verringert.

Vorzugsweise ist das Garantiesiegel als integraler Bestandteil des Bodenteils ausgebildet.

Das Bodenteil kann somit gemeinsam mit dem Garantiesiegel insbesondere einstückig gefertigt werden. Dies reduziert die Anzahl der Arbeitsschritte zum Herstellen des Aufgussbehälters.

Das Bodenteil kann eine hohlzylindrische Wandung aufweisen, die sich vom Bodenteil in Richtung des Deckelteils erstreckt. Diese Wandung kann durch das Garantiesiegel in einen Basisring und einen Trennring unterteilt sein. Vorzugsweise erstreckt sich diese hohlzylindrische Wandung entlang der Peripherie des Bodenteils.

Die Wandung ermöglicht das Bereitstellen eines geschützten Innenraums zwischen dem Bodenteil und den Deckelteil, in welchen das Wandteil mit der variablen Länge angeordnet sein kann.

Dieses ist dabei durch diese hohlzylindrische Wandung gegen Umwelteinflüsse und/oder Krafteinwirkung von aussen geschützt.

Durch die Unterteilung in einen Basisring und einen Trennring kann somit ein Teil der hohlzylindrischen Wandung vom Bodenteil abgetrennt werden. Elemente, die mit dem Trennring in Verbindung sind, können also nach dem Abtrennen des Trennringes relativ zum Bodenteil bewegt werden.

Vorzugsweise ist das zweite Ende des Wandteils zwischen dem Deckelteil und dem Trennring geklemmt.

Durch das Abtrennen des Trennringes und nachfolgendes Abheben des Trennringes vom Basisring wird das zweite Ende des Wandteils somit ebenfalls relativ zum Basisring und damit relativ zum Bodenteil bewegt. Dies ermöglicht das Expandieren des Aufgussbehälters durch eine Verlängerung des Wandteils.

Die Klemmung zwischen dem Deckelteil und dem Trennring gewährleistet eine flüssigkeitsdichte Verbindung zwischen dem Deckelteil und dem Wandteil.

Zum Klemmen des Wandteils kann das Deckelteil zwei konzentrische Stege aufweisen die mit dem Trennring in Wirkverbindung sind oder bringbar sind.

Die zwei Stege stellen also im Wesentlichen eine Nut bereit in die der Trennring eingebracht werden kann.

Der Trennring kann mit dem Deckelteil damit einfach und sicher verbunden werden.

Zur Verbindung des Bodenteils mit dem Deckelteil kann eine Schnappverbindung vorgesehen sein.

Eine Schnappverbindung weist den Vorteil auf, dass eine gegenüber der Haltekraft erhöhte Initialkraft aufgebracht werden muss um die Verbindung herzustellen. Entsprechend gross muss die Kraft sein, um die Verbindung wieder zu lösen. Bei entsprechender Ausbildung der Schnappverbindung, beispielsweise insbesondere mit einem Hinterschnitt oder mit Elementen an den Stegen, die den Trennring bereichsweise hintergreifen, ist ein Lösen dieser Schnappverbindung ohne Zerstörung nicht mehr möglich.

Zum Bereitstellen der Schnappverbindung kann an einem der konzentrischen Stege ein Vorsprung zum Eingriff in eine entsprechende Vertiefung an dem Trennring angeordnet sein.

Dadurch kann eine zuverlässige, einfache Verbindung zwischen dem Deckelteil und dem Trennring geschaffen werden.

Die Schnappverbindung ist vorzugsweise derart ausgebildet, dass eine Kraft zum Lösen dieser Schnappverbindung, insbesondere um ein Vielfaches, grösser ist als die Kraft zum Aufreissen des Garantiesiegels.

Zumindest an einem der konzentrischen Stege kann eine oder können mehrere axiale Verlängerungen vorgesehen sein die das Garantiesiegel übergreifen.

Das Garantiesiegel kann somit einerseits gegenüber äusseren Einflüssen geschützt werden, andererseits kann, insbesondere wenn das Garantiesiegel Öffnungen aufweist, das Garantiesiegel geschlossen werden, sodass keine Verunreinigungen das Garantiesiegel durchdringen können.

An der oder an den axialen Verlängerungen kann ein Vorsprung zum Eingriff in eine entsprechende Vertiefung an dem Basisring angeordnet sein.

Der Vorsprung ermöglicht in Zusammenwirkung mit der Vertiefung eine umlaufende Abdichtung zwischen dem Basisring und dem Deckelteil.

Vorzugsweise weist der Aufgussbehälter ein Einlassventil auf, welches am Deckelteil angeordnet ist.

Durch die spezifische Ausbildung eines Einlassventils am Deckelteil kann auf einen aufwändigen Aufstechmechanismus an einer Teezubereitungsvorrichtung verzichtet werden. Die Ausbildung mit einem Einlassventil ermöglicht zudem einen einfachen Einfüllvorgang in den expandierbaren Aufgussbehälter, der zuverlässig reproduzierbar ist.

Der Aufgussbehälter kann ein Auslassventil aufweisen, welches am Bodenteil angeordnet ist. Durch ein Auslassventil kann der Aufgussbehälter im expandierten Zustand gehalten werden, bis dieses Auslassventil geöffnet wird. Eine im Aufgussbehälter eingefüllte Aufgussflüssigkeit kann somit über eine vorbestimmte Zeitdauer in Kontakt mit einer sich im Behälter befindlichen Aufgusstrockensubstanz gehalten werden.

Das Auslassventil kann nach Ablauf der Dauer beispielsweise mechanisch geöffnet werden und/oder durch den Aufbau eines Überdrucks im Aufgussbehälter.

Innerhalb des Aufgussbehälters kann ein Filtersieb angeordnet sein, wobei das Filtersieb vorzugsweise am Bodenteil angeordnet ist.

Das Filtersieb verschliesst eine Ausgabeöffnung des Aufgussbehälters und verhindert, dass die Aufgusstrockensubstanz zusammen mit dem Aufgussgetränk aus dem Aufgussbehälter ausgegeben wird.

Zusätzlich kann am Bodenteil des Aufgussbehälters ein Auflager ausgebildet sein, welches mit dem Deckelteil zusammenwirkt und dieses abstützt.

Das Auflager kann dabei als Bestandteil des Filtersiebs ausgebildet sein und insbesondere einen integralen Bestandteil des Filtersiebs bilden.

Der Aufgussbehälter kann, mit Ausnahme der vorliegend beschriebenen Elemente, insbesondere entsprechend dem Aufgussbehälter, der in der EP 3 119 245 B1 beschrieben und beansprucht ist, ausgebildet sein. Der Aufgussbehälter ist somit insbesondere zur Aufnahme einer Aufgussflüssigkeit flüssigkeitsdicht ausgebildet und dazu ausgebildet, durch Einbringung von Aufgussflüssigkeit von einer kollabierten Gestalt in eine expandierte Gestalt ausgedehnt zu werden. Alternativ zu dieser Ausführungsform kann er zusätzlich mit einem Einlassventil, wie vorliegend beschrieben, ausgebildet sein. Der Aufgussbehälter wird zum Befüllen dann nicht mehr durchstochen, sondern durch das Einlassventil befüllt.

Der vorliegend beschriebene Aufgussbehälter eignet sich insbesondere zur Durchführung des Verfahrens, welches in der EP 3 119 245 B1 beschrieben und beansprucht ist. Bei dem Verfahren handelt es sich insbesondere um ein Verfahren, bei dem eine abgemessene Menge einer Aufgusstrockensubstanz mit einer abgemessenen Menge einer Aufgussflüssigkeit in Kontakt gebracht wird und dadurch das Aufgussgetränk entsteht. Die Aufgusstrockensubstanz wird in dem Aufgussbehälter bereitgestellt, der zunächst in einer kollabierten Gestalt vorliegt und in eine expandierte Gestalt ausdehnbar ist. Die Aufgussflüssigkeit wird in den Aufgussbehälter eingebracht. Der Aufgussbehälter wird expandiert, sodass die Aufgusstrockensubstanz im Aufgussbehälter zur Bildung des Aufgussgetränks während einer Kontaktierungsdauer mit der Aufgussflüssigkeit in Kontakt gehalten wird. Dann wird der Aufgussbehälter durch Zusammendrücken zumindest teilweise in seine kollabierte Gestalt zurückgeführt und dabei wird das Aufgussgetränk mindestens teilweise aus dem Aufgussbehälter ausgetrieben.

Anhand von schematischen Figuren wird die Erfindung nachfolgend anhand von einem Ausführungsbeispiel im Detail erläutert. Es zeigt:
- Figur 1:: Eine perspektivische Schnittansicht eines Aufgussbehälters;
- Figur 2A:: eine perspektivische Ansicht des Aufgussbehälters aus der Figur 1 in einer kollabierten Form;
- Figur 2B:: eine perspektivische Ansicht des Aufgussbehälters der Figur 2A in einer expandierten Form;
- Figur 3:: eine Detailansicht aus Figur 1;
- Figur 4:: eine perspektivische Ansicht des Aufgussbehälters aus der Figur 1 während der Fertigung;
- Figur 5:: eine Detailansicht aus Figur 4;
- Figur 6:: eine perspektivische Ansicht des Aufgussbehälters aus der Figur 1 während der Fertigung;
- Figur 7:: eine Detailansicht eines weiteren Fertigungsschrittes;
- Figur 8:: eine perspektivische Ansicht des zusammengebauten Aufgussbehälters;
- Figur 9:: eine Detailansicht eines Garantiesiegels;
- Figur 10:: die Ansicht gemäss der Figur 3 nach dem Aufbrechen des Garantiesiegels;
- Figur 11:: die Ansicht gemäss der Figur 10 nach dem Abheben des Deckelteils.

Der besseren Übersichtlichkeit halber wurde in sämtlichen Figuren auf die Darstellung einer sich gegebenenfalls im Aufgussbehälter 20 befindlichen Aufgusstrockensubstanz verzichtet.

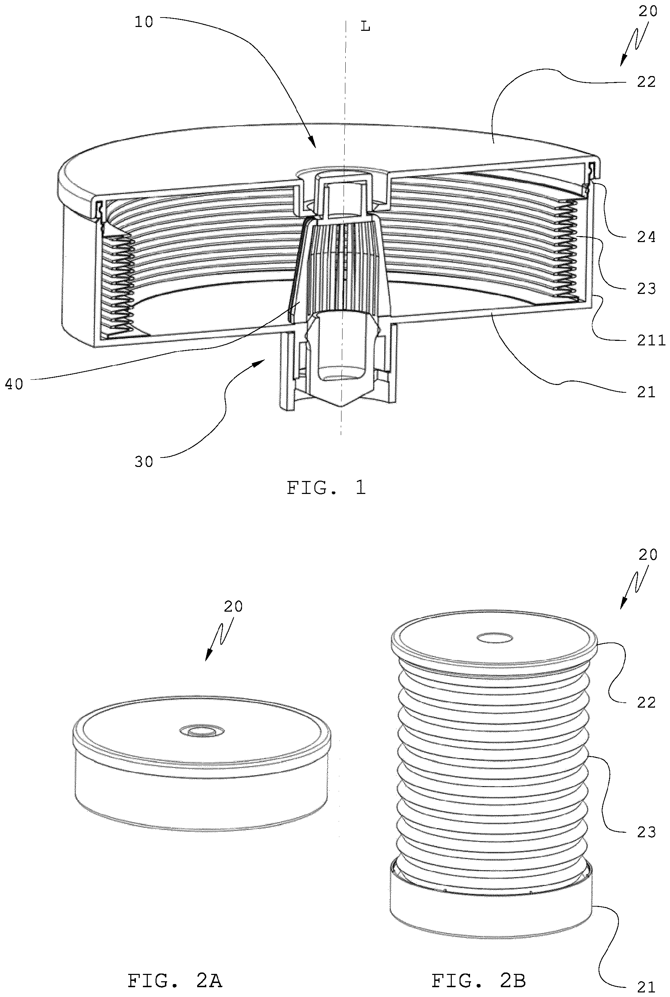

Figur 1 zeigt eine perspektivische Schnittansicht eines Aufgussbehälters 20. Der Aufgussbehälter 20 weist ein Einlassventil 10 und ein Auslassventil 30 mit einer Ausgabeöffnung auf. Der Aufgussbehälter selbst umfasst ein Bodenteil 21, ein Deckelteil 22 sowie ein Wandteil 23. Das Wandteil 23 ist expandierbar und vorliegend in der Form eines Faltenbalges ausgebildet. Das Wandteil 23 ist einerseits flüssigkeitsdicht mit dem Bodenteil 21 verbunden und andererseits flüssigkeitsdicht mit dem Deckelteil 22. Dieses Wandteil 23 ist vom Bodenteil 21 und vom Deckelteil 22 umschlossen. Dazu ist am Bodenteil 21 an seiner Peripherie eine sich in Richtung des Deckelteils 22 erstreckende hohlzylindrische Wandung 211 vorgesehen. Wie in der Figur 1 ersichtlich ist, ist das Einlassventil 10 als integraler Bestandteil des Deckelteils 22 ausgebildet. Ebenfalls ersichtlich ist, dass das Auslassventil 30 zumindest teilweise als integraler Bestandteil des Bodenteils 21 ausgebildet ist. Ein Filtersieb 40, welches stromaufwärts der Ausgabeöffnung und damit des Auslassventils 30 angeordnet ist, ist ebenfalls illustriert.

Der Aufgussbehälter 20 gemäss der Figur 1 ist im Wesentlichen rotationssymmetrisch ausgebildet und weist eine zentrale Achse L auf. Diese definiert ebenfalls eine axiale Richtung. Auch bei nicht rotationssymmetrischen Ausbildungen des Aufgussbehälters 20 ist eine zentrale Achse vorhanden. Diese ist im Wesentlichen durch die Verbindung von Einlassventil 10 und Auslassventil 30 definiert. Ebenfalls durch das Einlassventil 10 und das Auslassventil 30 ist eine Strömungsrichtung definiert die vom Einlassventil 10 zum Auslassventil 30 läuft.

Die Figur 2A zeigt eine perspektivische Ansicht des Aufgussbehälters 20 aus der Figur 1 in einer kollabierten Form. Wie aus der Figur 2A und aus der Figur 1 ersichtlich ist, ist in der kollabierten Form das Bodenteil 21 über die an ihrer Peripherie angeordnete Wandung 211 und das integral angeordnete Garantiesiegel 24 mit dem Deckelteil 22 verbunden.

Die Figur 2B zeigt eine perspektivische Ansicht des Aufgussbehälters aus der Figur 2A in einer expandierten Form. Durch das Einbringen eines Überdrucks über das Einlassventil 10 (siehe Figur 1) wurden das Garantiesiegel 24 der Wandung 221 des Bodenteils 21 aufgebrochen und das Wandteil 23 durch das Einfüllen von Aufgussflüssigkeit in den Aufgussbehälter 20 expandiert. Es versteht sich, dass vor dem Einbringen des Überdrucks das Einlassventil 10 geöffnet wurde. Der Aufgussbehälter 20 bleibt nachfolgend über eine vorbestimmte Zeit in dieser expandierten Form und wird im Anschluss zum Ausbringen des Aufgussgetränks zusammengedrückt. Es versteht sich, dass das Auslassventil 30 (siehe dazu Figur 1) insbesondere vor dem Zusammendrücken geöffnet und das Aufgussgetränk durch dieses Auslassventil 30 ausgegeben wird.

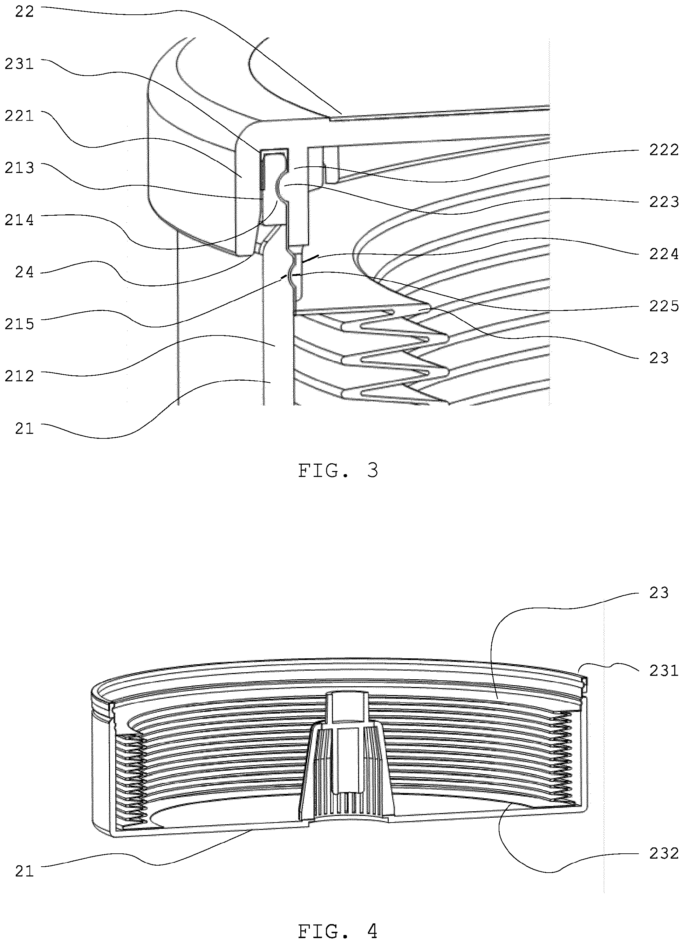

Die Figur 3 zeigt eine Detailansicht aus der Figur 1. Dargestellt ist ein Ausschnitt der Verbindung zwischen dem Deckelteil 22 und dem Bodenteil 21. Am Deckelteil 22 sind ein erster Steg 223 und ein zweiter Steg 222 ausgebildet. Der erste Steg 221 läuft entlang der Peripherie des Deckelteils 22. Der zweite Steg 222 ist in Bezug zum ersten Steg 221 radial nach innen versetzt. Diese beiden Stege 221 und 222 bilden gemeinsam eine Nut zur Aufnahme eines entsprechenden Gegenstücks. Das Gegenstück ist als Bestandteil der hohlzylindrischen Wandung 211 des Bodenteils 21 ausgebildet. Die hohlzylindrische Wandung 211 unterteilt sich in einen Basisring 212 und einen Trennring 213. Der Trennring 213 ist in der Nut zwischen den Stegen 221 und 222 gehalten.

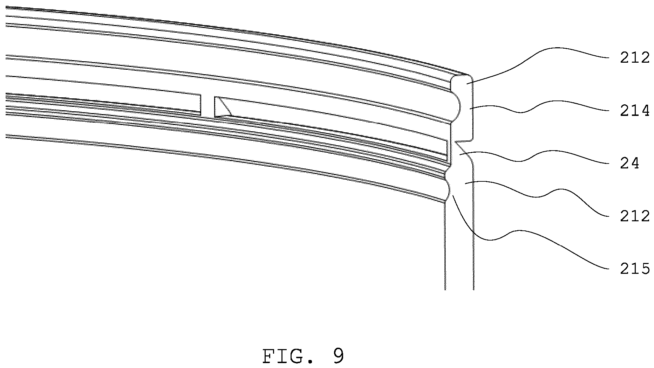

Der Trennring 213 ist mit dem Basisring 212 über ein Garantiesiegel 24 verbunden. Das Garantiesiegel 24 besteht vorliegend aus einzelnen Abreissstegen (siehe dazu auch Figur 9). Am Trennring 213 ist eine Vertiefung 214 vorgesehen, in die ein Vorsprung 223 des zweiten Stegs 222 eingreift. Am zweiten Steg 222 ist eine Verlängerung 224 vorgesehen, an der ebenfalls ein Vorsprung 225 ausgebildet ist. Der Vorsprung 225 greift in eine Vertiefung 215 am Basisring 212 ein. Wie aus der Illustration gemäss der Figur 3 ersichtlich ist, übergreift die Verlängerung 224 das Garantiesiegel 24 in Richtung des Basisrings 212. Die Verlängerung 224 weist entlang ihres Umfangs mehrere hier nicht näher bezeichnete Unterbrüche auf, die ein besseres Abheben vom Basisring 212 während des Öffnungsvorgangs des Aufgussbehälters 20 ermöglichen.

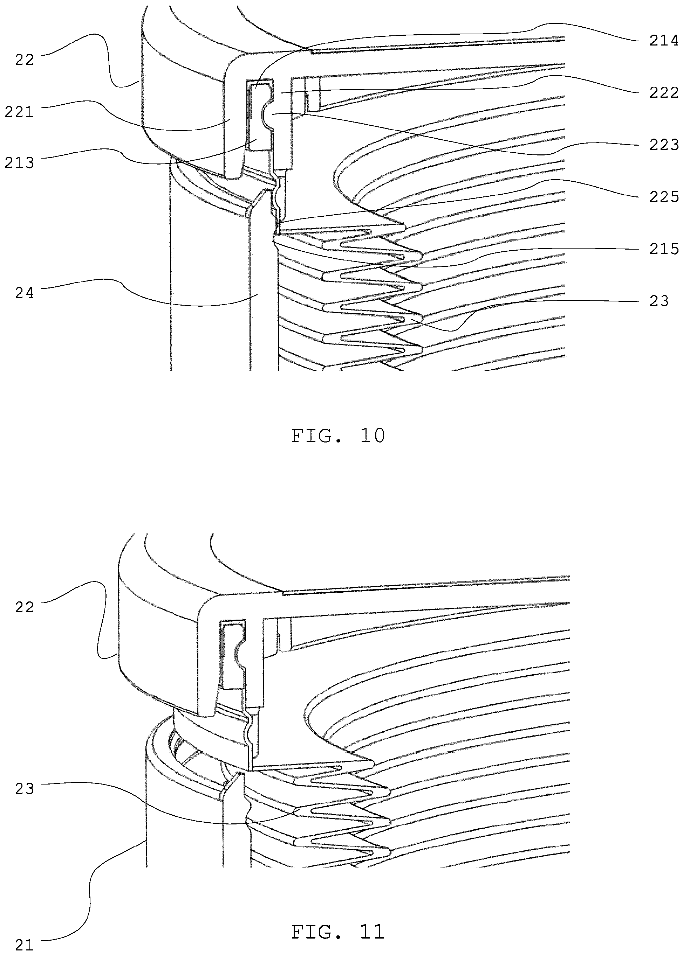

Zwischen dem Trennring 213 und den Stegen 221 und 222 ist ein zweites Ende 231 des Wandteils 23 eingeklemmt. Durch diese Klemmung ist das Wandteil 23 flüssigkeitsdicht mit dem Deckelteil 22 verbunden, selbst nach dem Abtrennen des Trennrings 213, das unter Bezugnahme auf die nachfolgenden Figuren 10 und 11 erläutert wird.

Die Figur 4 zeigt eine perspektivische Ansicht des Aufgussbehälters 20 aus der Figur 1 während der Fertigung. In einem ersten Schritt wird ein Bodenteil 21 bereitgestellt welches eine wie vorliegend beschriebene hohlzylindrische Wandung 211 aufweist. Die Wandung 211 ist an der Peripherie des Bodenteils 221 angeordnet und erstreckt sich entgegen der Strömungsrichtung. Innerhalb dieser Wandung 221 ist das Wandteil 23 angeordnet. Das Wandteil 23 ist vorliegend in der Form eines Faltenbalges ausgebildet. Das Wandteil 23 ist aus einem flexiblen Kunststoff, insbesondere aus einem biologisch abbaubaren Kunststoff, vorzugsweise aus einem bio-basierten Kunststoff, gefertigt. Das Wandteil 23 weist ein erstes Ende 232 und ein zweites Ende 231 auf. Das erste Ende 232 ist mit dem Bodenteil 21 verbunden, vorliegend durch eine Verklebung. Alternativ kann auch eine Verschweissung vorgesehen sein.

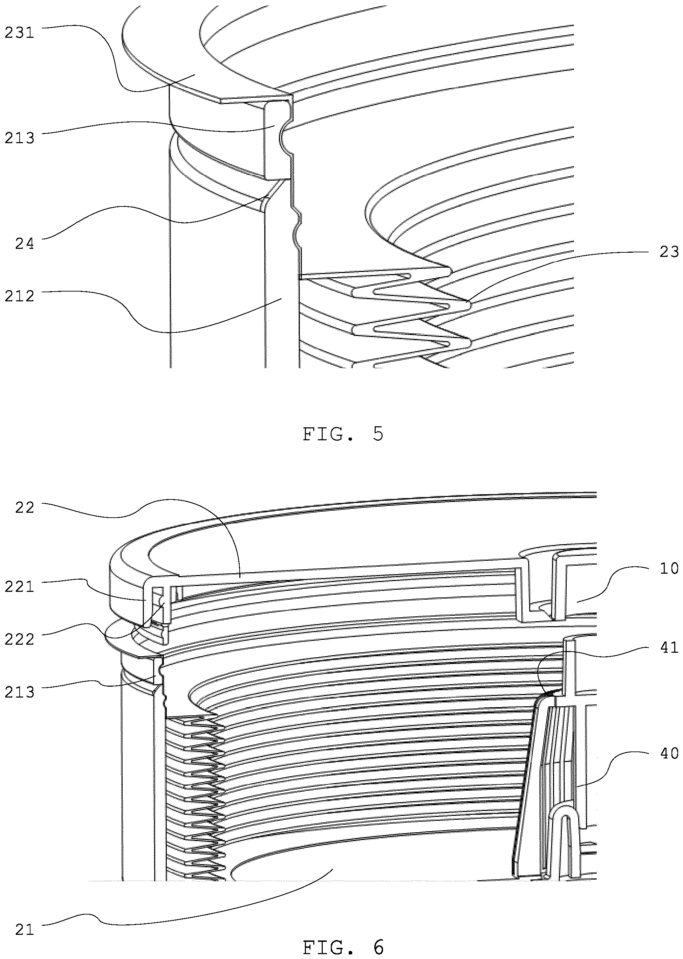

Das zweite Ende 231 weist eine, nach aussen gerichtete, Abbiegung auf (siehe dazu Figur 5) die auf einem oberen Ende der hohlzylindrischen Wandung 211 aufliegt. Diese Abbiegung ist vorliegend nicht dargestellt. Die hohlzylindrische Wandung 211 ist unterteilt in einen Basisring 212 und einen Trennring 213 (siehe dazu Figur 3).

Die Figur 5 zeigt eine Detailansicht aus der Figur 4. Deutlich ersichtlich ist die Ausbildung des zweiten Endes 231 des Wandteils 23. Das zweite Ende 231 überspannt das Garantiesiegel 24 vom Basisring 212 bis zum Trennring und erstreckt sich radial über den Trennring 213 hinaus.

Die Figur 6 zeigt eine perspektivische Ansicht des Aufgussbehälters 20 aus der Figur 1 während der Fertigung, nämlich den Schritt des Zusammenführens des Deckelteils 22 mit dem Bodenteil 21. Es versteht sich, dass vor diesem Schritt die Aufgusstrockensubstanz in den Aufgussbehälter 20, bzw. in den in der Figur 4 gezeigten halbgefertigten Aufgussbehälter 20 eingebracht wurde.

Gemäss der Figur 6 wird ein Deckelteil 22 bereitgestellt. Das Deckelteil 22 weist einen ersten Steg 221 und einen radial nach innen dazu versetzen zweiten Steg 222 auf. Diese beiden Stege 221 und 222 sind im Wesentlichen komplementär zum Trennring 213 ausgebildet, um diesen aufzunehmen. Am Bodenteil 21 ist zudem ein Auflager 41 ausgebildet das als integralen Bestandteil ein Filtersieb 40 aufweist. Das Auflager 41 ist im Wesentlichen komplementär zu einem Gegenstück des Einlassventils 10 ausgebildet. Wie aus der Figur 6 ersichtlich ist lässt sich somit das Einlassventil 10 auf dem Auflager 41 abstützen.

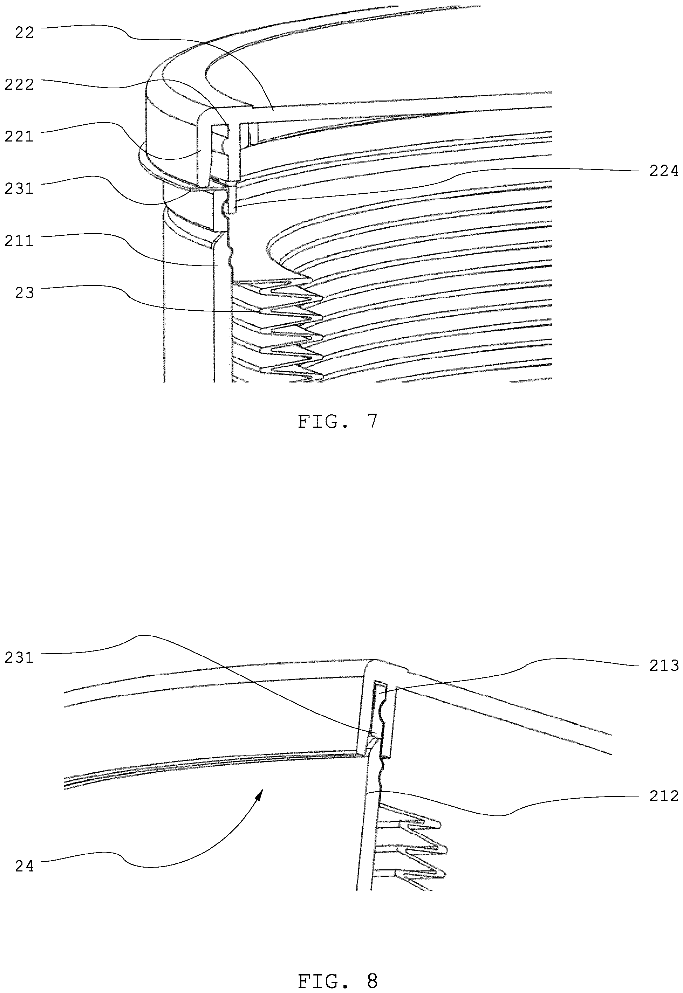

Die Figur 7 zeigt eine Detailansicht eines weiteren Fertigungsschrittes. Das Deckelteil 22 ist nun in Anlage mit dem zweiten Ende 231 des Wandteils 23. Die Verlängerung 224 des Stegs 222 erstreckt sich bereits in das Innere der hohlzylindrischen Wandung 211.

Nachfolgend wird das Deckelteil weiter in Richtung der hohlzylindrischen Wandung 211 bewegt, sodass die Stege 221 und 222 über den Trennring 213 geschoben werden. Entsprechend greifen die Vorsprünge 223 und 225 in entsprechende Vertiefungen 214 und 215, wie dies in der Figur 3 dargestellt ist.

Die Figur 8 zeigt eine perspektivische Ansicht des zusammengebauten Aufgussbehälters 20. Die Figur 8 ermöglicht die Ansicht auf das Garantiesiegel 24 welches zwischen dem Basisring 212 und dem Trennring 213 angeordnet ist. Das Garantiesiegel 24 umfasst vorliegend mehrere Abreissstege die mit entsprechenden Öffnungen voneinander beabstandet sind (siehe dazu auch Figur 9). Durch das Übergreifen des Garantiesiegels 24 einerseits durch den zweiten Steg 222 und der Verlängerung 224 (siehe Figur 3) sowie durch das Übergreifen eines entsprechenden Abschnitts des zweiten Endes 231 des Wandteils 23 sind diese Öffnungen jedoch verschlossen. Zudem ist der erste Steg 221 ebenfalls derart ausgebildet, dass er das Garantiesiegel 24, respektive die Öffnungen zwischen den Abreissstegen, ebenfalls übergreift.

Die Figur 9 zeigt eine Detailansicht des Garantiesiegels 24. Das Garantiesiegel 24 weist mehrere Abreissstege auf die mit einer Öffnung voneinander beabstandet sind. Die Abreissstege verbinden den Basisring 212 mit dem Trennring 213. Im Trennring 213 ist eine Vertiefung 214 zur Aufnahme eines entsprechenden Gegenstücks angeordnet. Im Basisring 212 ist ebenfalls eine Vertiefung 215 angeordnet, zur Aufnahme eines dieser Vertiefung 215 entsprechenden Gegenstücks.

Die Figur 10 zeigt die Ansicht gemäss der Figur 3 nach dem Aufbrechen des Garantiesiegels 24. Durch Einfüllen von einer Aufgussflüssigkeit durch das Einlassventil 10 (siehe dazu Figur 1) entsteht im Innern des Aufgussbehälters 20 ein Überdruck. Der Trennring 213 ist fest zwischen Stegen 221 und 222 gehalten, sodass die Abreissstege des Garantiesiegels entsprechend mit einer Kraft beaufschlagt werden, bis sie reissen. Der Vorsprung 225 der Verlängerung 224 löst sich aus der Vertiefung 215. Eine Verschiebung des Deckelteils bzw. eine Entfernung des Deckelteils 22 vom Bodenteil 21 ist ermöglicht, sodass sich das gefaltete Wandteil 23 entfalten kann.

Die Figur 11 zeigt die Ansicht gemäss der Figur 10 nach dem vollständigen Abheben des Deckelteils 22 vom Bodenteil 21. Das Deckelteil 22 ist lediglich noch mit dem Wandteil 23 mit dem Bodenteil 21 verbunden. Nach dem weiteren Füllen des Aufgussbehälters 20 nimmt dieser im Anschluss die in der Figur 2B gezeigte Form ein. Das Aufgussgetränk kann nach einer vorbestimmten Verweildauer wie zu der Figur 2B beschrieben ausgegeben werden.

## Patentansprüche

1. Expandierbarer Aufgussbehälter (20) zur Aufnahme einer Aufgusstrockensubstanz für die Zubereitung eines Aufgussgetränks, umfassend ein Bodenteil (21), ein Deckelteil (22) und ein das Bodenteil (21) und das Deckelteil (22) verbindendes Wandteil (23), wobei das Wandteil (23) eine variable Länge aufweist und mit einem ersten Ende (232) am Bodenteil (21) befestigt ist und mit seinem zweiten Ende (231) mit dem Deckelteil (22) verbunden ist, **dadurch gekennzeichnet, dass** das Deckelteil (22) und das Bodenteil (21) über ein zerstörbares Garantiesiegel (24) miteinander verbunden sind.

2. Aufgussbehälter (20) nach Anspruch 1, **dadurch gekennzeichnet, dass** das Garantiesiegel (24) als Abrissfilm ausgebildet ist.

3. Aufgussbehälter (20) nach Anspruch 1, **dadurch gekennzeichnet, dass** das Garantiesiegel (24) als eine Vielzahl von Abreissstegen ausgebildet ist.

4. Aufgussbehälter (20) nach einem der Ansprüche 1 bis 3,
**dadurch gekennzeichnet, dass** das Garantiesiegel (24) als integraler Bestandteil des Bodenteils (21) ausgebildet ist.

5. Aufgussbehälter (20) nach einem der Ansprüche 1 bis 4,
**dadurch gekennzeichnet, dass** das Bodenteil (21) eine hohlzylindrische Wandung (211) aufweist die sich vom Bodenteil (21) in Richtung Deckelteil (22) erstreckt, und diese Wandung (211) durch das Garantiesiegel (24) in einen Basisring (212) und einen Trennring (213) unterteilt ist.

6. Aufgussbehälter (20) nach Anspruch 5, **dadurch gekennzeichnet, dass** das zweite Ende (231) des Wandteils (23) zwischen dem Deckelteil (22) und dem Trennring (213) geklemmt ist.

7. Aufgussbehälter (20) nach Anspruch 6, **dadurch gekennzeichnet, dass** zum Klemmen des Wandteils (23) das Deckelteil (22) zwei konzentrische Stege (221, 222) aufweist, die mit dem Trennring (213) in Wirkverbindung sind oder bringbar sind.

8. Aufgussbehälter (20) nach einem der Ansprüche 1 bis 7, **dadurch gekennzeichnet, dass** zum Verbinden des Bodenteils (21) mit dem Deckelteil (22) eine Schnappverbindung vorgesehen ist.

9. Aufgussbehälter nach Anspruch 8 und 7, **dadurch gekennzeichnet, dass** zum Bereitstellen der Schnappverbindung an einem der konzentrischen Stege (221, 222) ein Vorsprung (223) zum Eingriff in eine entsprechende Vertiefung (214) an dem Trennring (213) angeordnet ist.

10. Aufgussbehälter nach Anspruch 9, **dadurch gekennzeichnet, dass** zumindest an einem der konzentrischen Stege (221, 222) eine oder mehrere axiale Verlängerungen (224) vorgesehen sind die das Garantiesiegel (24) übergreifen.

11. Aufgussbehälter nach Anspruch 10, **dadurch gekennzeichnet, dass** an den axialen Verlängerungen (224) ein Vorsprung (225) zum Eingriff in eine entsprechende Vertiefung (215) an dem Basisring (212) angeordnet ist.

12. Aufgussbehälter (20) nach einem der Ansprüche 1 bis 11, **dadurch gekennzeichnet, dass** am Deckelteil (22) ein Einlassventil (10) angeordnet ist.

13. Aufgussbehälter (20) nach einem der Ansprüche 1 bis 12, **dadurch gekennzeichnet, dass** am Bodenteil (21) ein Auslassventil (30) angeordnet ist.

14. Aufgussbehälter (20) nach einem der Ansprüche 1 bis 13, **dadurch gekennzeichnet, dass** innerhalb des Aufgussbehälters (20) ein Filtersieb (40) angeordnet ist, wobei das Filtersieb (40) vorzugsweise am Bodenteil (21) angeordnet ist.

## Claims

1. Expandable infusion container (20) for receiving a dried infusion substance for preparation of an infusion beverage, comprising a base part (21), a lid part (22) and a wall part (23) connecting the base part (21) and the lid part (22), wherein the wall part (23) has a variable length and is fastened with a first end (232) to the base part (21) and is connected with its second end (231) to the lid part (22), **characterized in that** the lid part (22) and the base part (21) are connected to one another via a destructible guarantee seal (24).

2. Infusion container (20) according to Claim 1, **characterized in that** the guarantee seal (24) is configured as a tear-off film.

3. Infusion container (20) according to Claim 1, **characterized in that** the guarantee seal (24) is configured as a plurality of tear-off webs.

4. Infusion container (20) according to one of Claims 1 to 3, **characterized in that** the guarantee seal (24) is configured as an integral component of the base part (21).

5. Infusion container (20) according to one of Claims 1 to 4, **characterized in that** the base part (21) comprises a hollow-cylindrical wall (211) that extends from the base part (21) in the direction of the lid part (22) and this wall (211) is divided by the guarantee seal (24) into a base ring (212) and a separating ring (213).

6. Infusion container (20) according to Claim 5, **characterized in that** the second end (231) of the wall part (23) is clamped between the lid part (22) and the separating ring (213) .

7. Infusion container (20) according to Claim 6, **characterized in that** for clamping the wall part (23) the lid part (22) has two concentric webs (221, 222) which are or can be brought into operative connection with the separating ring (213) .

8. Infusion container (20) according to one of Claims 1 to 7, **characterized in that** a snap connection is provided for connection of the base part (21) to the lid part (22).

9. Infusion container (20) according to Claim 8 and 7, **characterized in that** in order to provide the snap connection a projection (223) is provided on one of the concentric webs (221, 222) for engagement in a corresponding recess (214) is provided on the separating ring (213).

10. Infusion container (20) according to Claim 9, **characterized in that** one or more axial extensions (224) which overlap the guarantee seal (24) are provided at least on one of the concentric webs (221, 222).

11. Infusion container (20) according to Claim 10, **characterized in that** a projection (225) for engaging in a corresponding recess (215) on the base ring (212) is provided on the axial extensions (224).

12. Infusion container (20) according to one of Claims 1 to 11, **characterized in that** an inlet valve (10) is arranged on the lid part (22).

13. Infusion container (20) according to one of Claims 1 to 12, **characterized in that** an outlet valve (30) is arranged on the base part (21).

14. Infusion container (20) according to one of Claims 1 to 13, **characterized in that** a filter sieve (40) is arranged inside the infusion container (20), wherein the filter sieve (40) is preferably arranged on the base part (21).

## Revendications

1. Récipient d'infusion extensible (20) destiné à recueillir une matière sèche pour infusion en vue de la préparation d'une boisson infusée, comprenant une partie de fond (21), une partie formant couvercle (22) et une partie formant paroi (23) qui relie la partie de fond (21) et la partie couvercle (22), la partie paroi (23) présentant une longueur variable et étant fixée par une première extrémité (232) à la partie de fond (21) et étant reliée par sa deuxième extrémité (231) à la partie couvercle (22), **caractérisé en ce que** la partie couvercle (22) et la partie de fond (21) sont reliés l'une à l'autre par un scellage inviolable destructible (24) .

2. Récipient d'infusion (20) selon la revendication 1, **caractérisé en ce que** le scellage inviolable (24) est réalisé sous forme de film à arracher.

3. Récipient d'infusion (20) selon la revendication 1, **caractérisé en ce que** le scellage inviolable (24) est réalisé sous la forme d'une pluralité d'entretoises à arracher.

4. Récipient d'infusion (20) selon une des revendications 1 à 3, **caractérisé en ce que** le scellage inviolable (24) est réalisé en tant qu'élément faisant partie intégrante de la partie de fond (21).

5. Récipient d'infusion (20) selon une des revendications 1 à 4, **caractérisé en ce que** la partie de fond (21) présente une paroi (211) cylindrique creuse qui s'étend depuis la partie de fond (21) en direction de la partie couvercle (22), et **en ce que** cette paroi (211) est divisée par le scellage inviolable (24) en une bague de base (212) et une bague de séparation (213).

6. Récipient d'infusion (20) selon la revendication 5, **caractérisé en ce que** la deuxième extrémité (231) de la partie paroi (23) est serrée entre la partie couvercle (22) et la bague de séparation (213).

7. Récipient d'infusion (20) selon la revendication 6, **caractérisé en ce que**, pour le serrage de la partie paroi (23), la partie couvercle (22) présente deux cloisons (221, 222) concentriques qui sont en liaison fonctionnelle ou peuvent être amenées en liaison fonctionnelle avec la bague de séparation (213).

8. Récipient d'infusion (20) selon une des revendications 1 à 7, **caractérisé en ce que**, pour relier la partie de fond (21) à la partie couvercle (22), il est prévu une liaison par encliquetage.

9. Récipient d'infusion selon la revendication 8 et 7, **caractérisé en ce que**, pour l'obtention de la liaison par encliquetage, une saillie (223) est réalisée sur l'une des cloisons (221, 222) concentriques, en vue d'un engagement dans un creux (214) correspondant de la bague de séparation (213).

10. Récipient d'infusion selon la revendication 9, **caractérisé en ce que**, sur au moins une des cloisons (221, 222) concentriques, il est prévu un ou plusieurs prolongements (224) axiaux qui s'étendent sur le scellage inviolable (24).

11. Récipient d'infusion selon la revendication 10, **caractérisé en ce que**, sur les prolongements (224) axiaux, il est prévu une saillie (225) destinée à s'engager dans un creux (215) correspondant de la bague de base (212) .

12. Récipient d'infusion (20) selon une des revendications 1 à 11, **caractérisé en ce qu'**une valve d'entrée (10) est disposée sur la partie couvercle (22).

13. Récipient d'infusion (20) selon une des revendications 1 à 12, **caractérisé en ce qu'**une valve de sortie (30) est disposée sur la partie de fond (21).

14. Récipient d'infusion (20) selon une des revendications 1 à 13, **caractérisé en ce qu'**un tamis filtrant (40) est disposé à l'intérieur du récipient d'infusion (20), le tamis filtrant (40) étant de préférence disposé sur la partie de fond (21).
